# EUROPÄISCHE PATENTSCHRIFT

(11) **EP 1 359 100 B1**
(45) Veröffentlichungstag und Bekanntmachung des Hinweises auf die Patenterteilung: **20.02.2008**
(21) Anmeldenummer: 03004577.7
(22) Anmeldetag: 28.02.2003
(51) Int. Cl.: B65G 47/71

(54) **Vorrichtung zum Verbreitern und Verlangsamen eines Stroms aufrechtstehender Flaschen**
Device for widening and slowing down a conveying stream of upright standing bottles
Dispositif d'élargissement et de ralentissement d'un flux de convoyage de bouteilles verticales

(30) Priorität: 30.04.2002 DE 20206895 U
(43) Veröffentlichungstag der Anmeldung: 05.11.2003
(73) Patentinhaber: KRONES AG, 93068 Neutraubling (DE)
(72) Erfinder: Hüttner, Johann, 84066 Mallersdorf-Pfaffenberg (DE); Meindl, Theodor, 94333 Geiselhöring (DE); Hahn, Wolfgang, 93093 Donaustauf (DE)

(56) Entgegenhaltungen:
- EP-A1- 0 530 756
- EP-A2- 0 193 878
- DE-A1- 4 213 557

## Beschreibung

Die Erfindung betrifft eine Vorrichtung gemäß dem Oberbegriff des Anspruchs 1.

Es ist bereits eine derartige Vorrichtung bekannt, bei der der Abförderer gegenüber dem Zuförderer seitlich versetzt ist und der Flaschenstrom sowohl am Einlauf als auch am Auslauf des trichterartigen Übergangsbereichs stark umgelenkt wird (DE 35 05 253 C2). Bei der bekannten Vorrichtung laufen die Förderbänder des Übergangsbereichs parallel zum Zuförderer bzw. dessen linearer Verlängerung. Mit dieser Vorrichtung können auf Grund der gegenseitigen Abstützung der Flaschen und der Abstützung durch die Führungen des Trichters auch leicht kippende Flaschen, wie z. B. Kunststoffflaschen, relativ zuverlässig verlangsamt und verteilt werden. Ungünstig ist jedoch die zweimalige starke Umlenkung, die Lückenbildung und dadurch Störungen begünstigt.

Der Erfindung liegt die Aufgabe zugrunde, mit einfachen Mitteln die Funktion der bekannten Vorrichtung zu verbessern, so dass auch bei hohen Leistungen ein störungsfreier Flaschentransport gewährleistet ist.

Diese Aufgabe wird erfindungsgemäß durch die im Anspruch 1 angegebenen Merkmale gelöst.

Bei einer erfindungsgemäßen Vorrichtung findet, abgesehen vom leichten seitlichen Versetzen und Verdrängeln der Flaschen bei Bildung der mehrreihigen Formation, keine nennenswerte Umlenkung des Flaschenstroms statt, die zu Blockierungen oder Lücken führen könnte. Trotzdem ist durch die schräge Anordnung der Förderbänder im Zwischenbereich der erforderliche Querdruck zum Versetzen der Flaschen vorhanden.

Vorteilhafte Weiterbildungen der Erfindung sind in den Unteransprüchen enthalten.

Im Nachstehenden werden drei Ausführungsbeispiele der Erfindung anhand der Zeichnungen beschrieben. Es zeigen:
- Fig. 1: die Draufsicht auf eine erste Ausführung einer Vorrichtung zum Verbreitern eines Flaschenstroms
- Fig. 2: die Draufsicht auf eine zweite Ausführung einer Vorrichtung zum Verbreitern eines Flaschenstroms
- Fig. 3: die Draufsicht auf eine dritte Ausführung einer Vorrichtung zum Verbreitern eines Flaschenstroms.

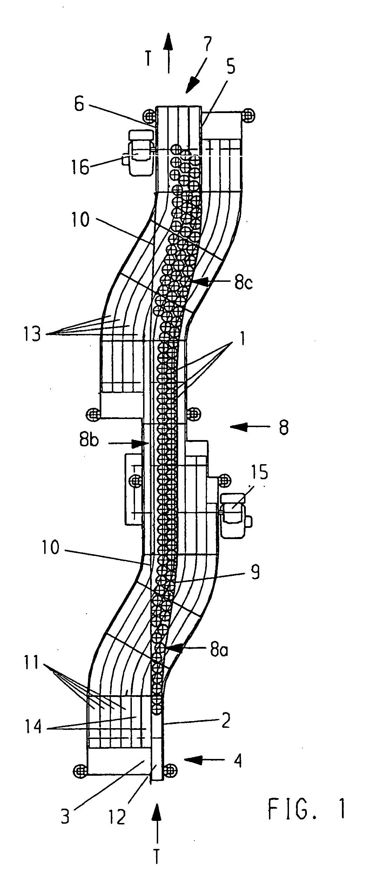

Die Vorrichtung nach Fig. 1 ist zum Verbreitern eines einspurigen Stroms von aufrecht stehenden, gefüllten und verschlossenen PET-Flaschen, im Nachstehenden kurz Flaschen 1 genannt, auf drei Spuren und zur gleichzeitigen Reduzierung der Transportgeschwindigkeit auf ca. ein Drittel des ursprünglichen Wertes eingerichtet.

Die Vorrichtung weist einen Zuförderer 4 auf, der ein horizontales Förderband 12 in Form einer Scharnierbandkette mit zwei parallelen seitlichen Geländern 2, 3 umfasst. Zwischen diesen werden die von einer nicht gezeigten Füll- und Verschließmaschine angeförderten Flaschen 1 in der durch den Pfeil T markierten Transportrichtung mit der Geschwindigkeit V1 kontinuierlich und linear zugeführt.

Die Vorrichtung weist ferner einen Abförderer 7 auf, der vier Förderbänder 13 in Form von Scharnierbandketten und zwei parallele seitliche Geländer 5, 6 umfasst. Zwischen diesen werden die Flaschen 1 mit der Geschwindigkeit V3 dreispurig zu einer nicht gezeigten Verpackungsmaschine kontinuierlich abtransportiert. Die Geschwindigkeit V3 entspricht in etwa einem Drittel der Geschwindigkeit V1

Die Geländer 2, 3 des Zuförderers 4 und die Geländer 5, 6 des Abförderers 7 sind durch zwei Führungen 9, 10 miteinander verbunden, die einen Übergangsbereich 8 definieren. In diesem nimmt die Breite des Flaschenstroms von einem Flaschendurchmesser auf ca. drei Flaschendurchmesser zu. Der Übergangsbereich 8 fluchtet sowohl mit dem Zuförderer 4 als auch dem Abförderer 7.

Die Verbreiterung der Transportbahn bzw. des Flaschenstroms erfolgt in zwei trichterartigen Erweiterungen 8a, 8c der Führungen 9, 10 zwischen denen ein Bereich 8b gleicher Breite, jedoch breiter als der Zuförderer 4, vorliegt. Hierdurch wird eine definierte und kontrollierte Verbreiterung der Flaschenformation in zwei Schritten ermöglicht, zwischen denen eine Beruhigung und Stabilisierung des Flaschenstroms stattfindet. Hierdurch ist auch bei instabilen Flaschen und höchsten Leistungen ein zuverlässiger, lückenloser und störungsfreier Transport realisierbar. Dabei verlaufen das auf der linken Seite des Flaschenstroms befindliche Geländer 3, die sich anschließende Führung 10 und das auf der linken Seite des Flaschenstroms befindliche Geländer 6 praktisch geradlinig in einer Flucht, während die auf der rechten Seite des Flaschenstroms befindliche Führung 9 einen schräg zur Führung 10 verlaufenden Anfangs- und Endbereich und einen parallel zur Führung 10 verlaufenden Mittelbereich aufweist. Die Transportbahn erweitert sich somit zweimal in etwa um den gleichen Betrag zur rechten Seite des Transportwegs hin wobei die grundlegende Transportrichtung T beibehalten wird.

Das Förderband 12 ist kurvengängig und läuft im Endbereich des Zuförderers 4 schräg nach rechts unter einem spitzen Winkel zur Transportrichtung T aus der Transportbahn heraus, und geht dann in einen parallel zur Transportrichtung T angeordneten, jedoch seitlich versetzten Bereich über. An dessen Ende sitzt der Antriebsmotor 15 für das Förderband 12. Auf der linken Seite des Förderbands 11 verlaufen zwei gleichfalls kurvengängige Förderbänder 14 mit identischer Bahnkurve, die im Bereich des Zuförderers 4 beginnen und im Bereich des Antriebsmotors 15 enden. Sie werden von diesem über ein Untersetzungsgetriebe mit einer etwas geringeren Geschwindigkeit angetrieben als das Förderband 12. Auf Grund des so im Bereich 8a vorliegenden spitzen Winkels zwischen den Förderbändern 12, 14 und der Transportrichtung T bzw. dem Zuförderer 12 und dessen linearer Verlängerung werden die Flaschen im Bereich 8a leicht nach rechts gegen die Führung 9 gedrängt. Da die Förderbänder 14 zudem langsamer laufen als das Förderband 12 ergibt sich ein exaktes und kontrollierbares seitliches Versetzten der Flaschen 1, wie es in Figur 1 dargestellt ist.

Auf der linken Seite der beiden Förderbänder 14 schließen sich wiederum vier kurvengängige Förderbänder 11 an, die den gleichen Anfangsverlauf wie die Förderbänder 14 aufweisen, jedoch geradlinig durch den Bereich 8b weiterlaufen und schließlich im Bereich 8c wiederum unter einem spitzen Winkel zur Transportrichtung T nach rechts den Übergangsbereich 8 verlassen. Die vier Förderbänder 11 werden durch einen Antriebsmotor 16 mit der Geschwindigkeit V2 angetrieben, die ca. halb so groß ist wie die Geschwindigkeit V1. Auf diese Weise wird ähnlich wie im Bereich 8a auch im Bereich 8c in Zusammenwirkung mit der Geschwindigkeitsverringerung und der nach rechts gerichteten Bewegungskomponente durch die Förderbänder 11 ein weiteres gezieltes und kontrolliertes Verdrängeln der Flaschen 1 auf drei Bahnen bewirkt.

Auch die vier Förderbänder 13 des Abförderers 7 sind kurvengängig und schließen sich an der linken Seite des Endbereichs der Förderbänder 14 an. Sie laufen im Bereich 8c gleichfalls schräg zur Transportrichtung T und tragen zum Verdrängeln der Flaschen bei, bevor sie ihre in Transportrichtung verlaufende Lage einnehmen.

Durch die vorbeschriebene Anordnung der Förderbänder, Geländer und Führungen sowie die vorbeschriebenen Geschwindigkeitsabstufungen ergibt sich insgesamt ein reproduzierbares, störungsfreies Verbreiten des einspurig zugeführten Flaschenstroms auf drei Reihen, wobei die Hauptbewegung der Flaschen 1 geradlinig in Transportrichtung T verläuft. Auf Grund der insgesamt sehr geringen Relativbewegungen der Flaschen 1 während der Umformierung und des Fehlens starker Umlenkungen wie bei der bekannten Vorrichtung lassen sich auch Flaschen 1 mit ungünstigen Reibungskoeffizienten und geringer Standsicherheit, z.B. schlanke PET-Flaschen mit Petaloidboden, störungsfrei verarbeiten.

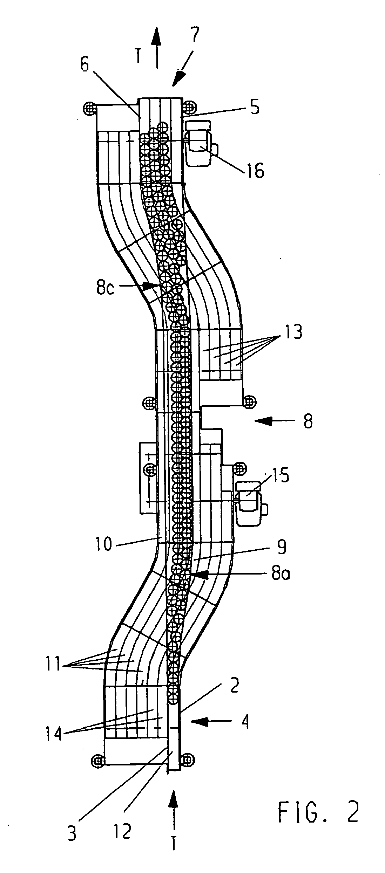

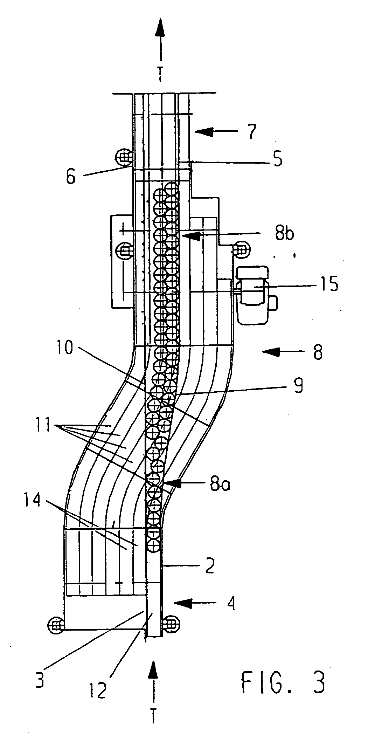

Entsprechendes gilt für die Vorrichtungen nach Fig. 2 und 3. Die Vorrichtung nach Fig. 2 unterscheidet sich von der Vorrichtung nach Fig. 1 allein dadurch, dass die Erweiterung des Übergangsbereichs im Bereich 8c zur linken Seite des Transportwegs T hin erfolgt. Dementsprechend sind die Führungen, Geländer und Transportbänder in diesem Bereich spiegelbildlich zur Fig. 1 angeordnet. Die Vorrichtung nach Fig. 3 unterscheidet sich von der derjenigen nach Fig. 1 dadurch, dass lediglich eine Verbreiterung des Flaschenstroms auf zwei Spuren und eine Reduzierung der Transportgeschwindigkeit um ca. die Hälfte erfolgt. Dadurch entfällt der zweite Erweiterungsbereich 8c und der Bereich 8b geht direkt in den Abförderer 7 über.

Die schräg zur Transportrichtung T verlaufenden Bereiche der Förderbänder 11 bis 14 können ggf. durch entsprechend verkürzte geradlinige Förderbänder ersetzt werden, die insgesamt schräg zur Transportrichtung T verlaufen. Auch kann bei den Vorrichtung nach Fig. 1 und 2 der Bereich 8b verkürzt oder auch vollständig eliminiert werden.

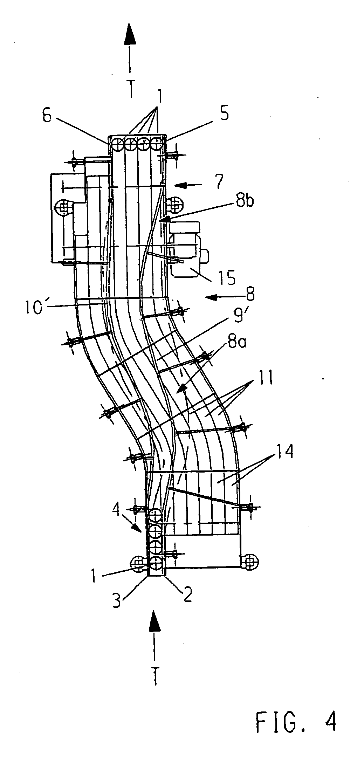

Die Vorrichtung nach Fig. 4 schließlich ist im prinzipiellen Aufbau der Vorrichtung nach Fig. 3 ähnlich, d.h. im Übergangsbereich 8 ist nur eine einzige Gruppe von insgesamt sieben nebeneinanderliegenden kurvengängigen Förderbändern 11 mit S-förmigem Verlauf vorhanden, wobei allerdings die Krümmung entgegengesetzt zur Vorrichtung nach Fig. 3 verläuft. Auch sind bei der Vorrichtung nach Fig. 4 im Übergangsbereich 8 beidseitig Führungen 9', 10' vorgesehen, welche die Geländer 2, 3 des Zuförderers 4 mit den Geländern 5, 6 des Abförderers 7 durchgehend verbinden und so den Flaschenstrom beidseitig führen.

Im Unterschied zur Vorrichtung nach Fig. 3 jedoch sind bei der Vorrichtung nach Fig. 4 die sich trichterartig erweiternden Führungen 9', 10' nicht aus geradlinigen sondern aus bogenförmigen Teilstücken zusammengesetzt, derart, dass sich insgesamt ein leicht schlangen- oder S-förmiger Verlauf des Übergangsbereichs 8 bzw. seiner beiden Teilbereiche 8a, 8b ergibt. Die Flaschen 1 werden daher beim Passieren des Übergangsbereichs 8 bezüglich der ursprünglichen Transportrichtung T zuerst leicht nach rechts, dann leicht nach links und dann wiederum leicht nach rechts abgelenkt, also nicht abrupt, und werden beidseitig durch die Führungen 9', 10' geleitet. Der schlangenförmige Verlauf der Führungen 9', 10' ist an den S-förmigen Verlauf der Förderbänder 11 derart abgestimmt, dass im gesamten Übergangsbereich 8 die Förderbänder 11 unter einem spitzen Winkel gegenüber den Führungen 9', 10' verlaufen und hierdurch den gewünschten Querdruck zum Versetzen der Flaschen erzeugen. Dieser ist bei der Vorrichtung nach Fig. 4 derart optimiert, dass mit einer relativ kurzen Baulänge ein Umformieren eines schnelllaufenden einreihigen Flaschenstroms in einen langsam laufenden vierreihigen Flaschenstrom möglich ist, insbesondere beim Transportieren von PET-Flaschen. Beim Transport von Glasflaschen empfiehlt es sich, den schlangenförmigen Übergangsbereich etwa "bauchiger" zu gestalten, wie in Fig. 4 strichpunktiert angedeutet ist.

## Patentansprüche

1. Vorrichtung Zum Verbreitern und Verlangsamen eines Stroms aufrechstehender Flaschen (1), mit einem einspurigen, beidseitig mit Geländern (2, 3) versehenen Zuförderer (4), einem mehrspurigen, beidseitig mit Geländern (5, 6) versehenen, langsamer laufenden Abförderer (7) sowie mit die Geländer des Zuförderers und des Abförderers miteinander verbindenden, einen sich in Transportrichtung erweiternden Übergangsbereich (8) bildenden Führungen (9, 10), in dem die Flaschen durch am Boden angreifende Förderbänder (11, 14) oder dgl. reibschlüssig transportiert werden, **dadurch gekennzeichnet, dass** die Förderbänder (11, 14) im Übergangsbereich (8) zumindest teilweise schräg zur Transportrichtung (T) des Zuförderers (4) verlaufen.

2. Vorrichtung nach Anspruch 1, **dadurch gekennzeichnet, dass** der Zuförderer (4) mit dem Abförderer (7) fluchtet.

3. Vorrichtung nach Anspruch 1 oder 2, **dadurch gekennzeichnet, dass** eine der beiden Führungen (10) mit dem auf der gleichen Seite liegenden Geländer (3) des Zuförderers (4) und dem auf der gleichen Seite liegenden Geländer (6) des Abförderers (7) im wesentlichen fluchtet.

4. Vorrichtung nach einem der Ansprüche 1 bis 3, **dadurch gekennzeichnet, dass** zumindest ein Teil der Förderbänder (11 bis 14) kurvengängig ausgebildet ist und einen jeweils parallel zur Transportrichtung (T) verlaufenden Anfangs- und Endbereich sowie einen schräg zur Transportrichtung (T) verlaufenden Zwischenbereich aufweist.

5. Vorrichtung nach Anspruch 1 oder 2, **dadurch gekennzeichnet, dass** die den sich erweiternden Übergangsbereich (8) bildenden beidseitigen Führungen (9`, 10') für die Flaschen (1) einen schlangen- oder S-förmigen Verlauf aufweisen.

## Claims

1. Device for the widening and slowing down of a flow of bottles standing upright (1), with as single-track feeder (4) provided with railings (2, 3) on both sides, with a multi-track carrier away (7) provided with railings (5, 6) on both sides, running more slowly, and also with guides (9, 10) connecting the railings of the feeder and the carrier away with each other, forming a transitional area (8) widening in the direction of transport, in which the bottles are transported with frictional contact through conveyor belts (11, 14) or the like intervening at ground level, **characterised by** the fact that the conveyor belts (11, 14) run in the transitional area (8) at least partly obliquely to the direction of transport (T) of the feeder.

2. Device according to claim 1, **characterised by** the fact that the feeder (4) is in alignment with the carrier away (7).

3. Device according to claim 1 or 2, **characterised by** the fact that one of the two guides (10) is essentially in alignment with the railing (3) of the feeder (4) situated on the same side and the railing (6) of the carrier away (7) situated on the same side.

4. Device according to one of the claims 1 to 3, **characterised by** the fact that at least a part of the conveyor belts (11 to 14) is formed going in a curve and exhibits an initial area and an end area in each case running parallel to the direction of transport (T) and also an intermediate area running obliquely to the direction of transport.

5. Device according to claim 1 or 2. **characterised by** the fact that the guides on both sides (9'. 10') for the bottles (1), forming the widening transitional area (8), exhibit a serpentine or S-shaped course.

## Revendications

1. Dispositif pour étaler et ralentir un flux de bouteilles debout (1) comprenant un convoyeur d'entrée (4) muni de rampes (2, 3), sur les deux côtés d'un convoyeur de sortie (7) plus lent, à plusieurs voies, muni de rampes (5, 6) des deux côté ainsi que des guides (9, 10) reliant les rampes du convoyeur d'entrée et du convoyeur de sortie en formant une zone transitoire (8) s'élargissant dans la direction de transport, et dans les guides, les bouteilles sont transportées par une liaison par friction, par les bandes transporteuses (11, 14) ou analogue, coopérant avec le fond des bouteilles,
**caractérisé en ce que**
les bandes transporteuses (11, 14) sont dirigées au moins en partie, en biais, par rapport à la direction de transport (T) du convoyeur d'entrée (4) .

2. Dispositif selon la revendication 1,
**caractérisé en ce que**
le convoyeur d'entrée (4) est aligné sur le convoyeur de sortie (7).

3. Dispositif selon la revendication 1 ou la revendication 2,
**caractérisé en ce que**
l'un des deux guides (10) est pratiquement aligné sur l'une des rampes (3) du convoyeur d'entrée (4) située du même côté et avec la rampe (6) du convoyeur de sortie (7) située également du même côté.

4. Dispositif selon l'une des revendications 1 à 3,
**caractérisé en ce qu'**
au moins une partie des bandes de convoyeur (11-14) suit un tracé en courbe et a une zone initiale et une zone terminale parallèles à la direction de transport (T) ainsi qu'une zone intermédiaire inclinée par rapport à la direction de transport (T).

5. Dispositif selon la revendication 1 ou la revendication 2,
**caractérisé en ce que**
les guides (9', 10') des bouteilles (1) formant des deux côtés la zone transitoire (8) qui s'élargit, ont un tracé ondulé ou en S.
